(19) Europäisches Patentamt
European Patent Office
Office européen des brevets

(11) **EP 3 998 448 A1**

(12) **EUROPEAN PATENT APPLICATION**
published in accordance with Art. 153(4) EPC

(43) Date of publication:
**18.05.2022 Bulletin 2022/20**

(21) Application number: **20836126.1**

(22) Date of filing: **25.06.2020**

(51) International Patent Classification (IPC):
**G01B 11/00** (2006.01)          **G01C 3/06** (2006.01)
**G06T 1/00** (2006.01)

(52) Cooperative Patent Classification (CPC):
**G01B 11/00; G01C 3/06; G06T 1/00**

(86) International application number:
**PCT/JP2020/024973**

(87) International publication number:
**WO 2021/006050 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.07.2019 JP 2019126689**

(71) Applicant: **Sony Semiconductor Solutions
Corporation
Atsugi-shi Kanagawa 243-0014 (JP)**

(72) Inventors:
• **KIMURA, Katsuji**
**Atsugi-shi, Kanagawa 243-0014 (JP)**
• **SAKIOKA, Youji**
**Atsugi-shi, Kanagawa 243-0014 (JP)**
• **IWAMA, Mitsuhiro**
**Atsugi-shi, Kanagawa 243-0014 (JP)**

(74) Representative: **Müller Hoffmann & Partner
Patentanwälte mbB
St.-Martin-Strasse 58
81541 München (DE)**

(54) **DISTANCE MEASUREMENT DEVICE AND BIOMETRIC AUTHENTICATION DEVICE**

(57)    The present disclosure relates to a distance measurement apparatus and a biometric authentication apparatus that are capable of conducting high-precise distance measurement even in intense light such as sunlight.

A light source applies light to a subject. An image sensor captures an image of the subject. A distance measurement section calculates a distance to the subject on the basis of the image obtained by the image capturing. A transparent member is formed, on the image sensor, so as to be integrated with the image sensor. In addition, the transparent member includes a transmission film that allows a peak wavelength band of the light of the light source to transmit therethrough. The present disclosure is applicable to a biometric authentication apparatus, for example.

FIG.7

EP 3 998 448 A1

# Description

[Technical Field]

The present disclosure relates to a distance measurement apparatus and a biometric authentication apparatus, and more particularly, to a distance measurement apparatus and a biometric authentication apparatus that are capable of conducting high-precise distance measurement even in intense light such as sunlight.

[Background Art]

In recent years, biometric authentication involving distance measurement has been popularly performed in order to prevent spoofing and fraud in mobile terminal devices equipped with cameras or in electronic settlement systems in banks, etc.

To achieve downsizing, thickness reduction, and performance improvement of a biometric authentication apparatus for performing biometric authentication involving distance measurement, a method including generating diffraction light from collimated light/infrared light, imaging reflection light resulting from application of the diffraction light to a subject, and analyzing the obtained image of the subject has been used.

Meanwhile, to achieve downsizing and thickness reduction of an image capturing apparatus, it has been known to use a solid state imaging element having a CSP (Chip Size Package) structure. For example, PTL 1 discloses a CSP solid state imaging element in which the upper surface portion of a glass wafer is coated with an IR cut filter layer.

[Citation List]

[Patent Literature]

[PTL 1]
JP 2007-73958A

[Summary]

[Technical Problems]

In a case where light reflected by a subject is imaged by a biometric authentication apparatus, if an image of the subject is captured in intense light such as sunlight (hereinafter, referred to as intense light), ghost and flare occur due to reflection of the intense light by an imaging surface of a solid state imaging element. This degrades the accuracy of distance measurement, so that there is a possibility that precise biometric authentication cannot be performed.

The present disclosure has been achieved in view of the above circumstances, and enables high-precise distance measurement even in intense light such as sunlight.

[Solution to Problems]

A distance measurement apparatus according to the present disclosure includes a light source that applies light to a subject, an image sensor that captures an image of the subject, a distance measurement section that calculates a distance to the subject on the basis of the image obtained by the image capturing, and a transparent member that is formed, on the image sensor, so as to be integrated with the image sensor. The transparent member includes a transmission film that allows a peak wavelength band of the light of the light source to transmit therethrough.

A biometric authentication apparatus according to the present disclosure includes a light source that applies light to a subject, an image sensor that captures an image of the subject, a distance measurement section that calculates a distance to the subject on the basis of the image obtained by the image capturing, and a transparent member that is formed, on the image sensor, so as to be integrated with the image sensor. The transparent member includes a transmission film that allows a peak wavelength band of the light of the light source to transmit therethrough.

The present disclosure includes the light source that applies light to a subject, the image sensor that captures an image of the subject, the distance measurement section that calculates the distance to the subject on the basis of the image obtained by the image capturing, and the transparent member that is formed, on the image sensor, so as to be integrated with the image sensor. The transparent member includes the transmission film that allows a peak wavelength band of the light of the light source to transmit therethrough.

[Brief Description of Drawings]

[FIG. 1]

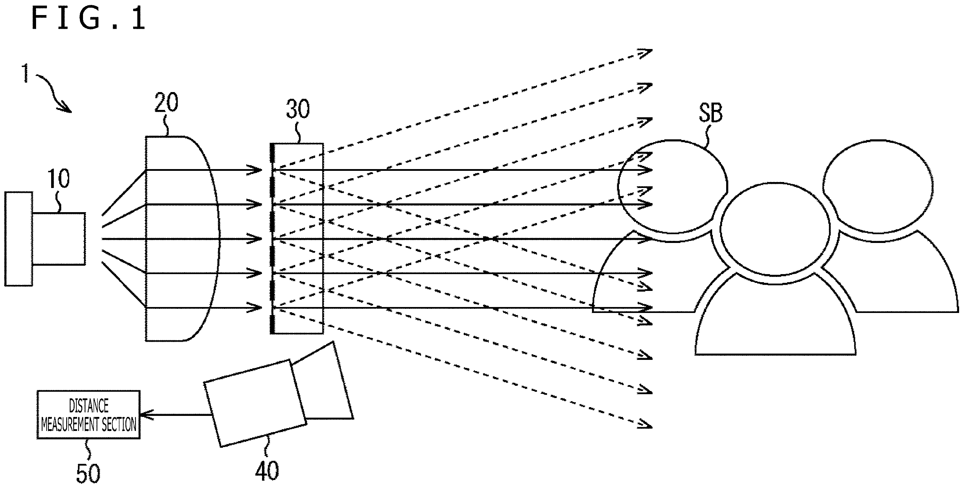

FIG. 1 is a diagram depicting a configuration example of a distance measurement apparatus according to an embodiment of the present disclosure.
[FIG. 2]

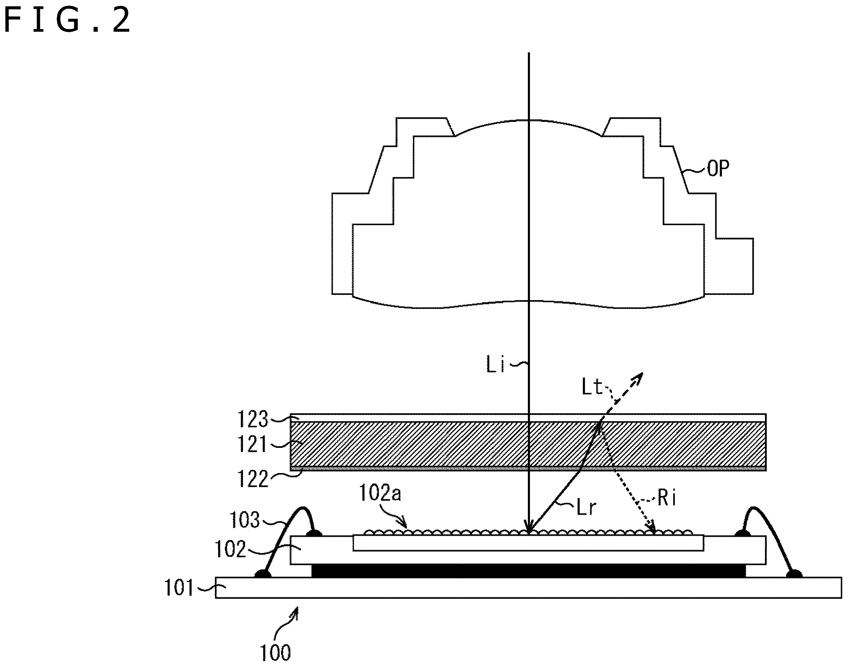

FIG. 2 is an explanatory diagram of problems in an existing distance measurement apparatus.
[FIG. 3]

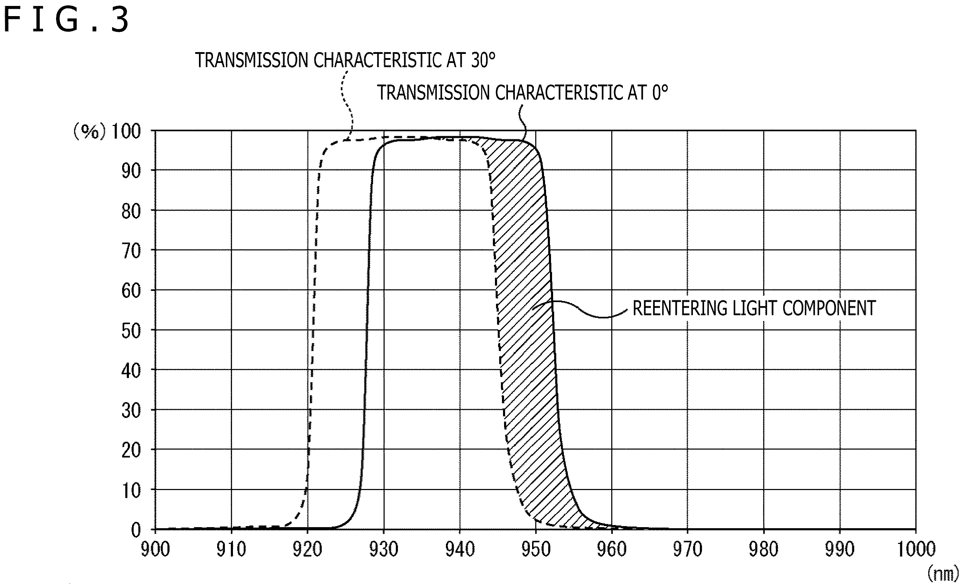

FIG. 3 is a diagram illustrating an example of transmission characteristics of a BPF.
[FIG. 4]

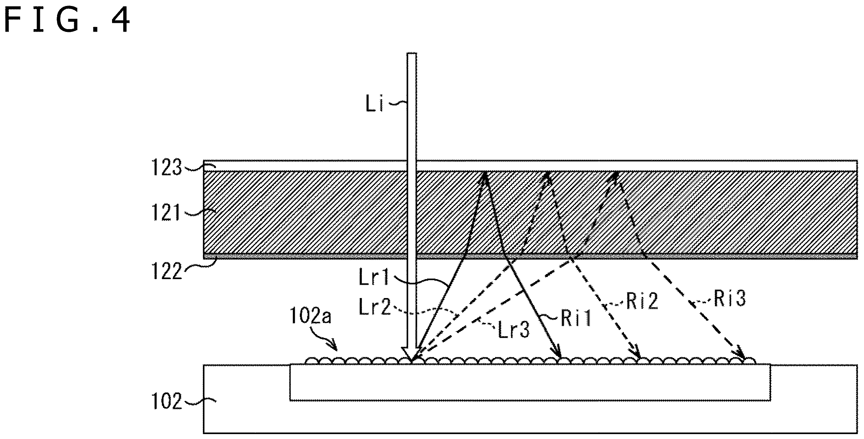

FIG. 4 is a diagram for explaining details of reflection at a BPF.
[FIG. 5]

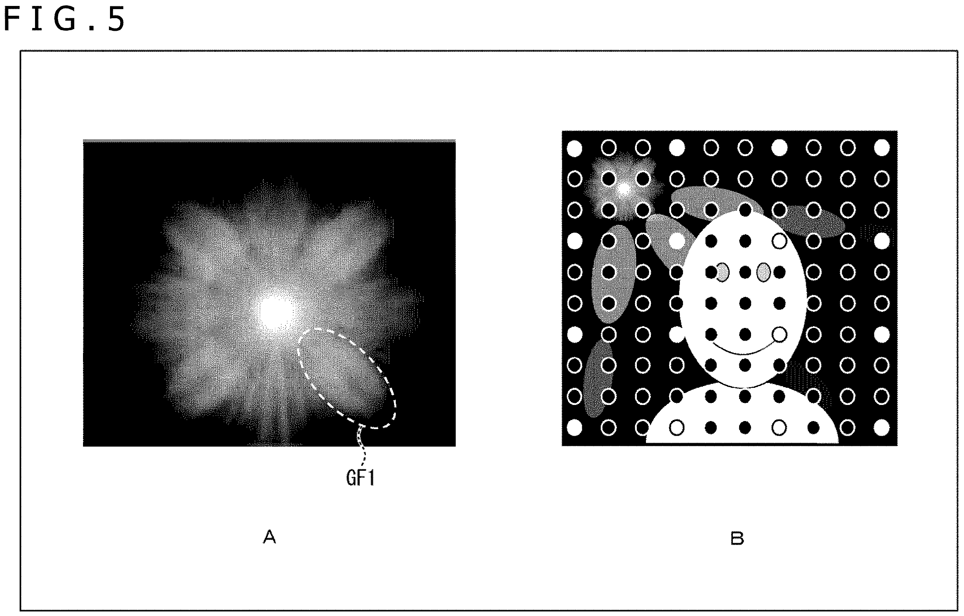

FIG. 5 depicts diagrams illustrating an example of ghost and flare.
[FIG. 6]

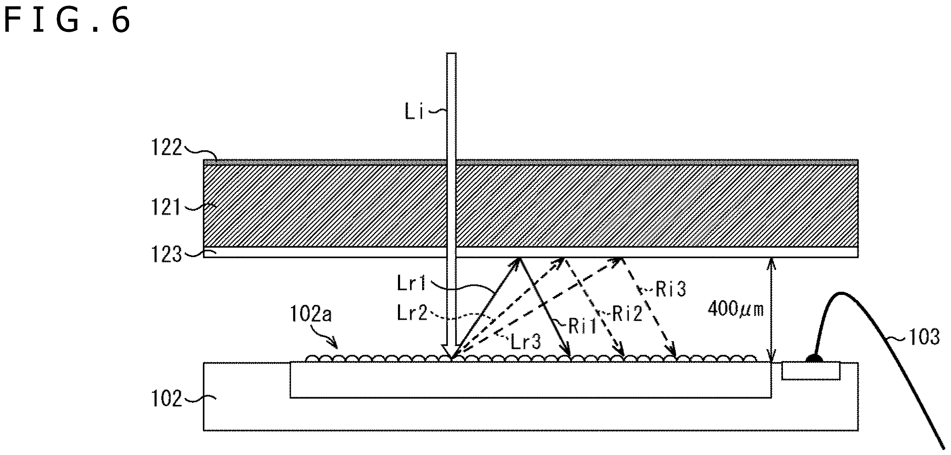

FIG. 6 is a diagram for explaining reflection at a BPF.
[FIG. 7]

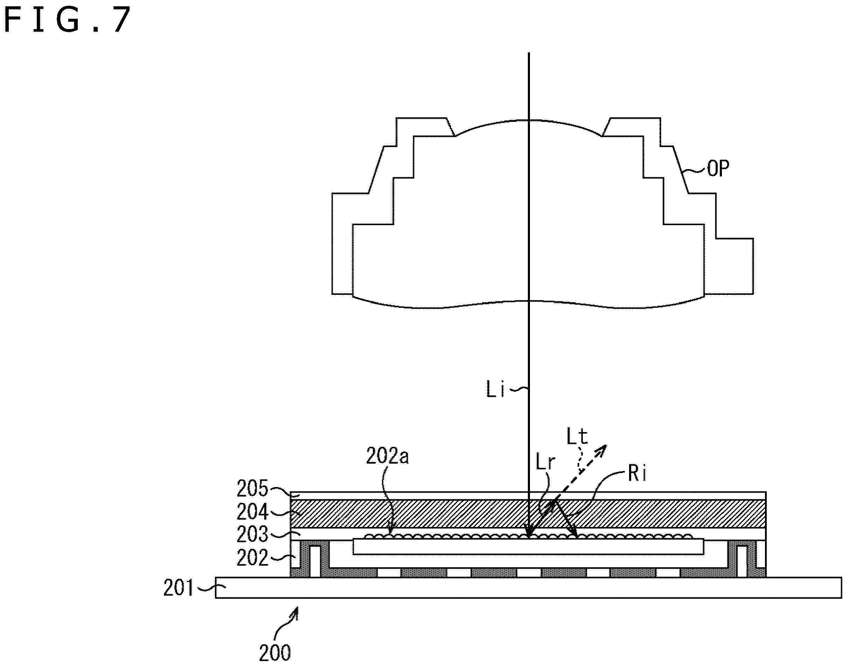

FIG. 7 is a diagram depicting an internal configuration example of an imaging camera included in a distance measurement apparatus according to a first embodiment.

[FIG. 8]

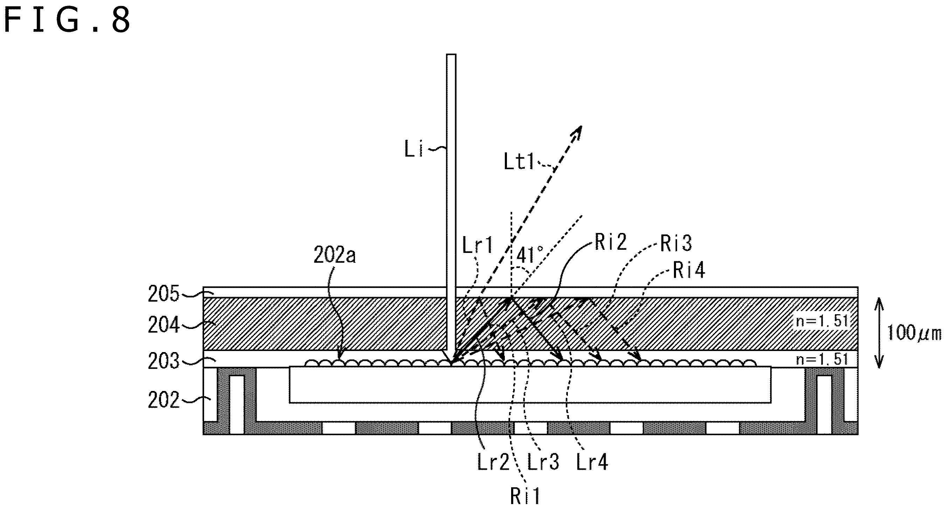

FIG. 8 is a diagram for explaining details of reflection at a BPF.

[FIG. 9]

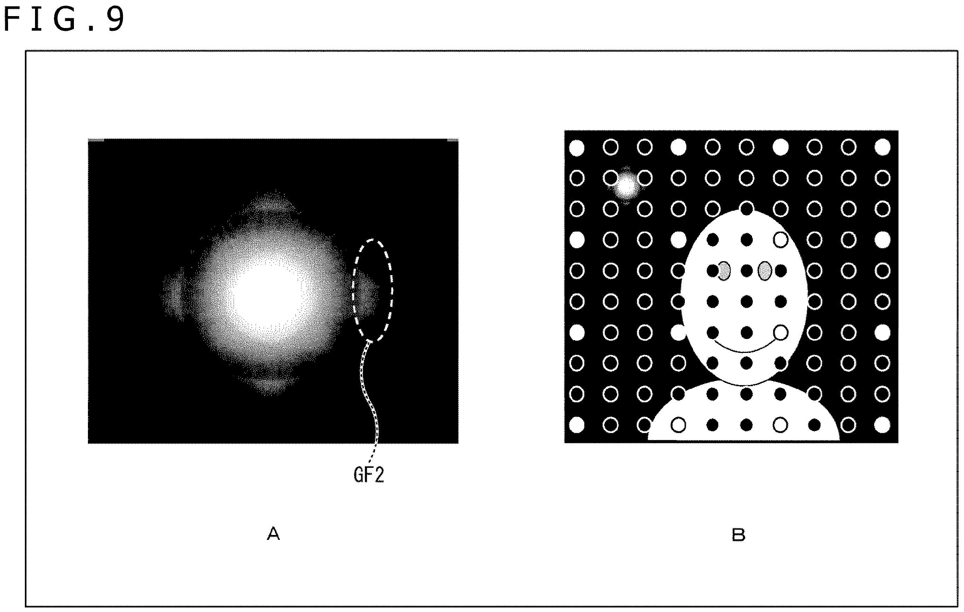

FIG. 9 depicts diagrams illustrating an example of ghost and flare.

[FIG. 10]

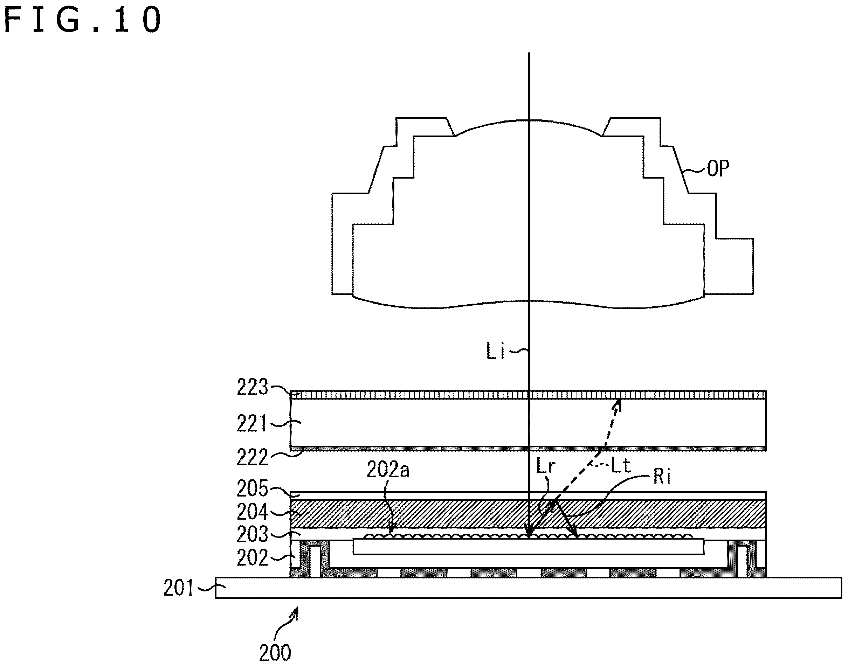

FIG. 10 is a diagram depicting an internal configuration example of an imaging camera included in a distance measurement apparatus according to a second embodiment.

[FIG. 11]

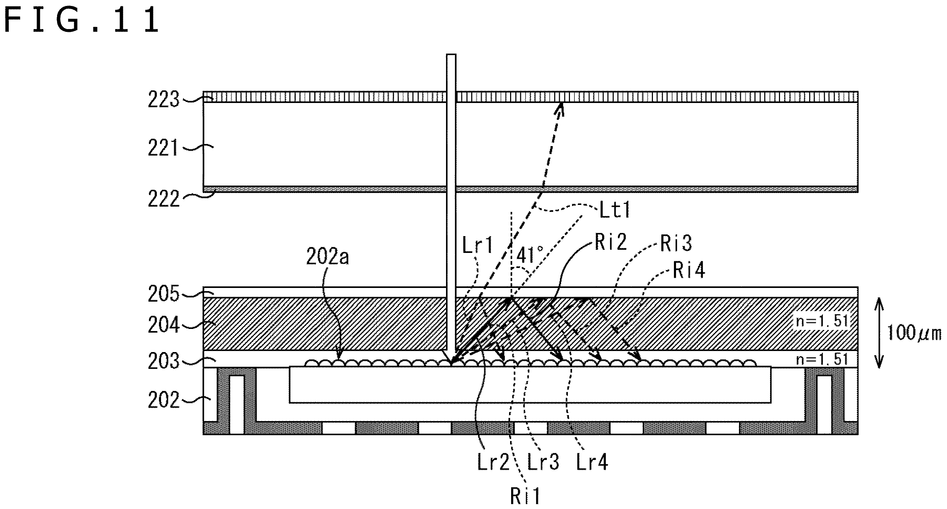

FIG. 11 is a diagram for explaining details of reflection at a BPF.

[FIG. 12]

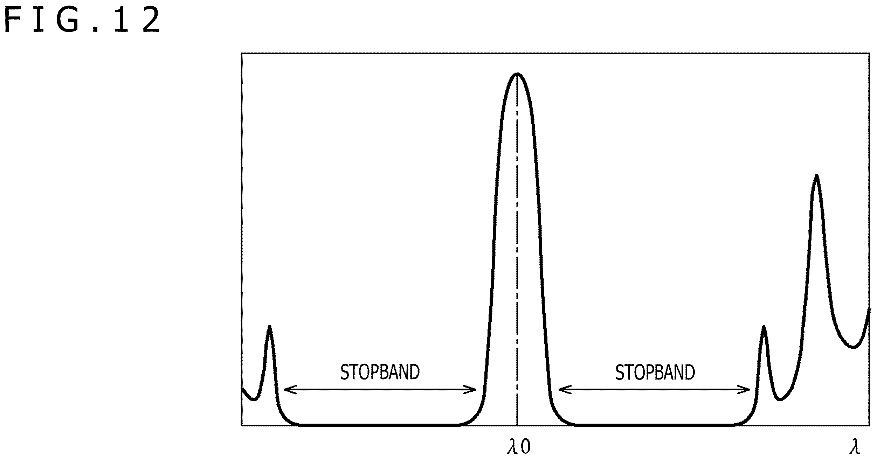

FIG. 12 is an explanatory diagram of stopbands.

[FIG. 13]

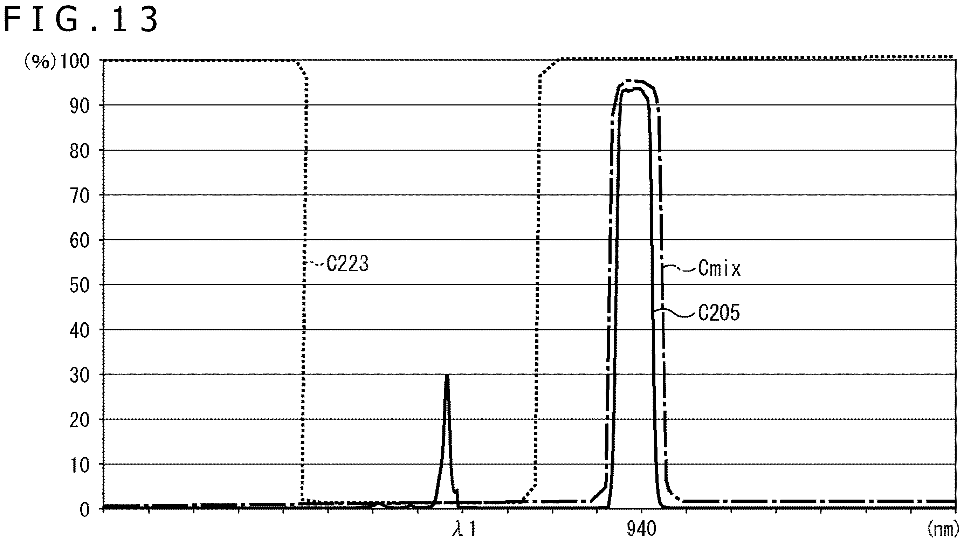

FIG. 13 is a diagram illustrating an example of transmission characteristics of a BPF and an adjustment film.

[FIG. 14]

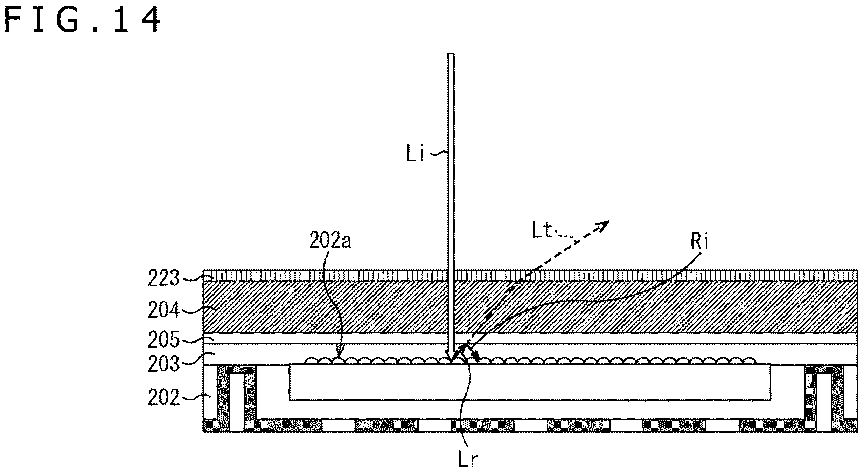

FIG. 14 is a diagram depicting an internal configuration example of an imaging camera included in a distance measurement apparatus according to a third embodiment.

[FIG. 15]

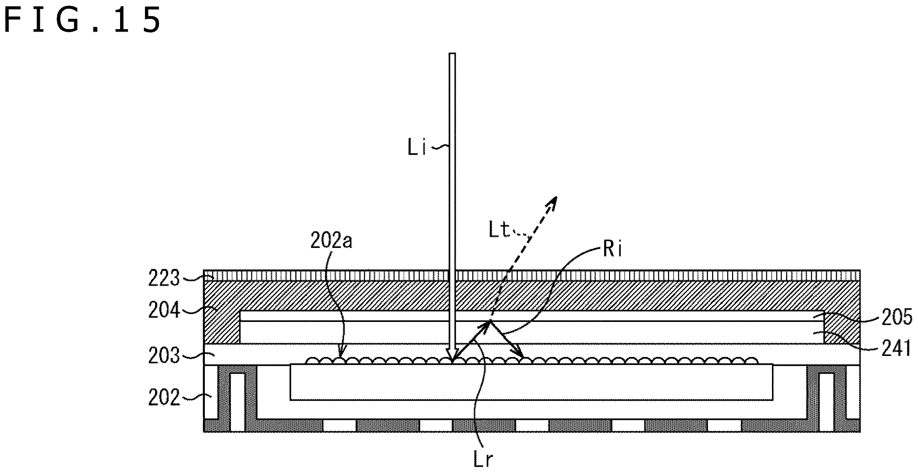

FIG. 15 is a diagram depicting an internal configuration example of an imaging camera included in a distance measurement apparatus according to a fourth embodiment.

[FIG. 16]

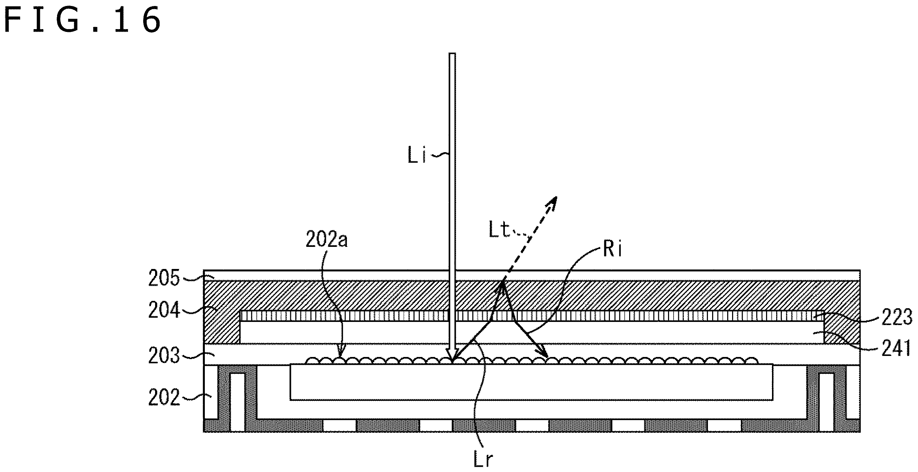

FIG. 16 is a diagram depicting an internal configuration example of an imaging camera included in a distance measurement apparatus according to a fifth embodiment.

[FIG. 17]

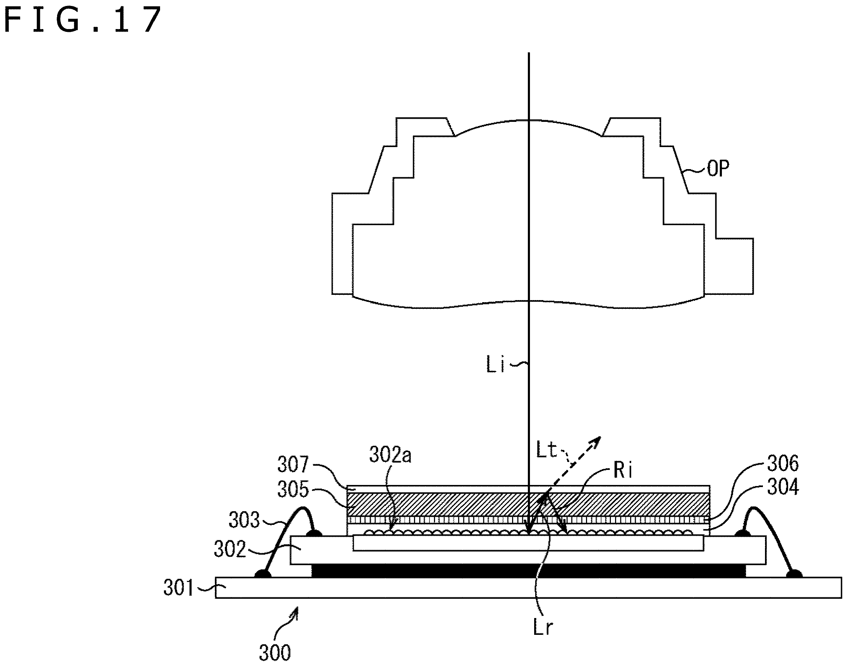

FIG. 17 is a diagram depicting an internal configuration example of an imaging camera included in a distance measurement apparatus according to a sixth embodiment.

[FIG. 18]

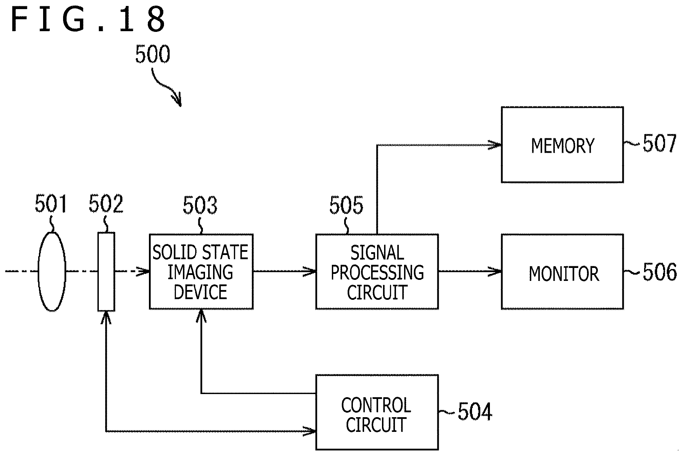

FIG. 18 is a block diagram depicting a configuration example of an electronic apparatus.

[Description of Embodiments]

Hereinafter, modes for carrying out the present disclosure (hereinafter, referred to as embodiments) will be explained. It is to be noted that the explanation will be given in the following order.

1. Configuration of Distance Measurement Apparatus
2. Problems in Existing Distance Measurement Apparatus
3. First Embodiment
4. Second Embodiment
5. Third Embodiment
6. Fourth Embodiment
7. Fifth Embodiment
8. Sixth Embodiment
9. Configuration Example of Electronic Apparatus

<1. Configuration of Distance Measurement Apparatus>

FIG. 1 is a diagram illustrating a configuration example of a distance measurement apparatus according to an embodiment of the present disclosure.

A distance measurement apparatus 1 depicted in FIG. 1 generates diffraction light from infrared light, images reflection light resulting from application of the diffraction light to a subject SB, and calculates the distance to the subject SB by analyzing the obtained image of the subject. The distance measurement apparatus 1 is configured as a biometric authentication apparatus that performs face authentication of the subject SB by conducting distance measurement.

The distance measurement apparatus 1 includes a light source 10, a correction lens 20, a diffractive optical element (DOE) 30, an imaging camera 40, and a distance measurement section 50.

The light source 10 emits infrared light. The correction lens 20 causes the infrared light of the light source 10 to perpendicularly enter the diffractive optical element 30.

The diffractive optical element 30 generates diffraction light from the light of the light source 10 which the correction lens 20 has caused to enter the diffractive optical element 30. The subject SB is irradiated with the diffraction light emitted from the diffractive optical element 30.

The imaging camera 40 captures an image of the subject SB being irradiated with the diffraction light, and supplies the obtained image (image data) to the distance measurement section 50.

By analyzing the image data supplied from the imaging camera 40, the distance measurement section 50 calculates distance information which indicates the distance to the subject SB or indicates recesses and projections of the subject SB. The distance information calculated by the distance measurement section 50 is used for face authentication of the subject SB.

<2. Problems in Existing Distance Measurement Apparatus>

FIG. 2 depicts an internal configuration example of an imaging camera included in an existing distance measurement apparatus.

The imaging camera includes a solid state imaging device 100. The solid state imaging device 100 images infrared light that has been reflected by a subject and has entered the solid state imaging device 100 through a camera lens OP.

The solid state imaging device 100 includes a substrate 101, a CMOS (Complementary Metal Oxide Semiconductor) image sensor 102 (hereinafter, simply referred to as an image sensor 102), and a wire 103. The image sensor 102 may include a CCD (Charge-Coupled Device) image sensor.

The image sensor 102 includes a light reception section 102a forming an imaging surface in which pixels are arranged in a matrix form. Respective bonding pads of the substrate 101 and the image sensor 102 are connected via the wire 103, so that the substrate 101 and the image sensor 102 are electrically connected.

In addition, a cover glass 121 is disposed above the image sensor 102. An antireflection layer 122 is formed on the lower surface (image sensor 102-side surface) of the cover glass 121. A bandpass filter (hereinafter, referred to as BPF) 123, which is a transmission film that allows a peak wavelength band of infrared light to transmit therethrough and that cuts the remaining bands of infrared light, is formed on the upper surface (camera lens OP-side surface) of the cover glass 121.

With such a configuration, the solid state imaging device 100 can image infrared light reflected by a subject.

In a case where light reflected by a subject is imaged with the configuration depicted in FIG. 1, if an image of the subject is captured in intense light such as sunlight, ghost and flare occur due to reflection of the intense light by the light reception section 102a of the image sensor 102.

That is, as illustrated in FIG. 1, entering light Li having a wavelength component of 940 nm included in the intense light having passed through the camera lens OP transmits through the BPF 123, and enters the light reception section 102a of the image sensor 102. Reflection light Lr resulting from diffractive reflection of the entering light Li by the light reception section 102a enters the BPF 123, and a part of the reflection light Lr becomes transmission light Lt to transmit through the BPF 123 while the remaining part thereof is reflected by the BPF 123 and becomes reentering light Ri to reenter the light reception section 102a.

Meanwhile, the transmission characteristic of the BPF 123 varies according to the entering angle of the infrared light.

As illustrated in FIG. 3, for example, the transmission characteristic of the BPF 123 when the entering angle of the infrared light is 0° is different from that when the entering angle is 30°. Specifically, when the entering angle is 0°, light of 930 to 950 nm is transmitted through the BPF 123, and when the entering angle is 30°, light of 920 to 940 nm is transmitted through the BPF 123.

Due to the transmission characteristics of the BPF 123, a light component, which is hatched in FIG. 3, of the reflection light Lr resulting from diffractive reflection by the light reception section 102a is reflected by the BPF 123, and becomes the reentering light Ri to reenter the light reception section 102a.

Further, the reflection light Lr resulting from the diffractive reflection enters the BPF 123 at an angle which depends on the order of diffraction.

FIG. 4 is a diagram for explaining the details of reflection at the BPF 123.

FIG. 4 depicts first order diffractive reflection light Lr1, second order diffractive reflection light Lr2, and third order diffractive reflection light Lr3. The diffractive reflection light Lr1, the diffractive reflection light Lr2, and the diffractive reflection light Lr3 are reflected by the BPF 123, and become reentering light Ri1, reentering light Ri2, and reentering light Ri3, respectively, to reenter the light reception section 102a.

Accordingly, in an image obtained by image capturing, ghost and flare occur in a wide range GF1 centered on the intense light, as illustrated in A of FIG. 5. As a result, ghost and flare caused by the reentering light components are superimposed on a subject which is a face authentication target, as illustrated in B of FIG. 5. In this case, the accuracy of distance measurement is degraded, so that there is a possibility that precise biometric authentication cannot be performed. It is to be noted that, in the image illustrated in B of FIG. 5, white circles each indicate the 0-th order diffraction light of diffraction light applied to the subject, and black circles each indicate the first or higher order diffraction light.

Alternatively, the BPF 123 may be formed not on the upper surface of the cover glass 121 but on the lower surface (image sensor 102-side surface) of the cover glass 121, as depicted in FIG. 6. With such a structure, the distances which the diffractive reflection lights Lr1, Lr2, and Lr3 respectively travel before being reflected by the BPF 123 are shortened because the distance between the light reception section 102a and the BPF 23 is shortened. Accordingly, the reentering points of the reentering lights Ri1, Ri2, and Ri3 in the light reception section 102a are made close to the entering point of the entering light Li. As a result, in an image obtained by image capturing, ghost and flare caused by the reentering light components can be arranged so as not to be superimposed on a subject which is a face authentication target.

However, in the structure in which the substrate 101 and the image sensor 102 are electrically connected via the wire 103, there is a limit in shortening the distance between the light reception section 102a and the BPF 123.

Specifically, the height of the wire 103 from a surface of the image sensor 102 (light reception section 102a) is normally set to approximately 300 $\mu$m, and the distance between the light reception section 102a and the BPF 123 is set to approximately 400 $\mu$m in view of manufacturing tolerance.

Here, when a refractive index n, a lattice constant d, a diffraction angle $\theta$, a light wavelength $\lambda$, and an order m are given, the m-th order diffraction light has a relation of Expression (1) which is obtained by a Young's interference experiment.

$$ndsin\theta = m\lambda \ldots (1)$$

If the pixel pitch (corresponding to the lattice constant) d in the light reception section 102a = 3 $\mu$m, the wavelength $\lambda$ of infrared light = 940 nm, and the refractive index n of air = 1, for example, the diffraction angle $\theta$ of the m-th order diffractive reflection light which is reflected by the light reception section 102a is expressed by Expression (2), on the basis of Expression (1).

$$\theta = arcsin(m\times\lambda/nd) \ldots (2)$$

Therefore, in accordance with Expression (2), the diffraction angle $\theta$ of the m-th order diffractive reflection light (m = 1) is approximately 18.26°. In a case where the distance between the light reception section 102a and the BPF 123 is 400 $\mu$m, the distance, in the light reception section 102a, from the entering point of the entering light Li to the reentering point of the reentering light Ri1 is approximately 264 $\mu$m. That is, the first order diffractive reflection light is imaged at a point apart, by 88 pixels, from the position where the intense light has been imaged.

Further, in accordance with Expression (2), the diffraction angle $\theta$ of the second order diffractive reflection light (m = 2) is approximately 38.80°. In a case where the distance between the light reception section 102a and the BPF 123 is 400 $\mu$m, the distance, in the light reception section 102a, from the entering point of the entering light Li to the reentering point of the reentering light Ri2 is approximately 644 $\mu$m. That is, the second order diffractive reflection light is imaged at a point apart, by 214 pixels, from the position where the intense light has been imaged.

Likewise, in accordance with Expression (2), the diffraction angle $\theta$ of the third order diffractive reflection light (m = 3) is approximately 70.05°. In a case where the distance between the light reception section 102a and the BPF 123 is 400 $\mu$m, the distance, in the light reception section 102a, from the entering point of the entering light Li to the reentering point of the reentering light Ri3 is approximately 2204 $\mu$m. That is, the third order diffractive reflection light is imaged at a point apart, by 734 pixels, from the position where the intense light has been imaged.

Consequently, even with the structure depicted in FIG. 6, the distance between the light reception section 102a and the BPF 123 cannot be made sufficiently short. As a result, there is a possibility that, in an image obtained by image capturing by the biometric authentication apparatus, ghost and flare caused by reentering light components are superimposed on a subject which is a face authentication target.

Thus, an explanation will be given below of embodiments in which the distance between a light reception section and a BPF is made sufficiently short to enable high-precise distance measurement even in intense light such as sunlight and precise biometric authentication can be performed.

<3. First Embodiment>

FIG. 7 depicts an internal configuration example of the imaging camera 40 included in the distance measurement apparatus 1 according to the first embodiment of the present disclosure.

The imaging camera 40 includes a solid state imaging device 200. The solid state imaging device 200 images infrared light that has been reflected by a subject and entered the solid state imaging device 200 through the camera lens OP.

The solid state imaging device 200 includes a substrate 201 and an image sensor 202. The image sensor 202 is fixed on the substrate 201 while being electrically connected to the substrate 201. The image sensor 202 includes a light reception section 202a forming an imaging surface in which pixels are arranged in a matrix form. The image sensor 202 may include a CMOS image sensor or may include a CCD image sensor.

A transparent member 204 that is formed of a glass substrate, for example, is bonded to the image sensor 202 with a transparent adhesive resin 203. Accordingly, the transparent member 204 is integrated with the image sensor 202. That is, the image sensor 202 has a CSP (Chip Size Package) structure. It is to be noted that the refractive index of the adhesive resin 203 is set to be substantially equal to that of the transparent member 204. In addition, the transparent member 204 may be formed of a material other than the glass substrate.

A bandpass filter (BPF) 205, which is a transmission film that allows at least a peak wavelength band (930 to 950 nm) of infrared light to transmit therethrough and that cuts the remaining wavelength bands of infrared light, is formed on the subject-side surface (camera lens OP-side surface) of the transparent member 204. The BPF 205 is formed by vapor deposition on the surface of the transparent member 204.

With such a configuration, the solid state imaging device 200 can image infrared light reflected by a subject.

In a case where light reflected by a subject is imaged with the configuration depicted in FIG. 7, if an image of the subject is captured in intense light such as sunlight, entering light Li of an infrared light component included in the intense light having passed through the camera lens OP transmits through the BPF 205, and enters the light reception section 202a of the image sensor 202. Reflection light Lr resulting from diffractive reflection of the entering light Li by the light reception section 202a enters the BPF 205. A part of the reflection light Lr becomes transmission light Lt to transmit through the BPF 205 and go out into the air layer while the remaining part thereof is reflected by the BPF 205 and becomes reentering light Ri to reenter the light reception section 202a.

FIG. 8 is a diagram for explaining the details of reflection at the BPF 205.

FIG. 8 depicts first order diffractive reflection light Lr1, second order diffractive reflection light Lr2, third order diffractive reflection light Lr3, and fourth order diffractive reflection light Lr4. The diffractive reflection lights Lr1, Lr2, Lr3, and Lr4 are reflected by the BPF 205, and become reentering lights Ri1, Ri2, Ri3, and Ri4, respectively, to reenter the light reception section 202a.

In the example in FIG. 8, particularly, a part of the diffractive reflection light Lr1 becomes transmission light Lt1 to transmit through the BPF 205, and the remaining part thereof is reflected by the BPF 205. On the other hand, the diffractive reflection lights Lr2, Lr3, and Lr4 having traveled through the transparent member 204 and having a reflection angle (the angle of entering the BPF 205) of 41° or greater are totally reflected by the BPF 205 because none of the light components of these lights transmit through the BPF 205.

In such a manner, the diffractive reflection lights having been reflected by the light reception section 202a and having a reflection angle of 41° or greater are totally reflected by the BPF 205 without going out of the transparent member 204 into the air layer. The lights totally reflected by the BPF 205 are received by the light reception section 202a. If the thickness of the transparent member 204 (the distance between the light reception section 202a and the BPF 205) is approximately 50 to 300 $\mu$m, for example, the lights are imaged at respective points close to the entering point of the intense light (entering light Li). The distance between the light reception section 202a and the BPF 205 can be set to at least less than 400 $\mu$m. In the example in FIG. 8, the distance is 100 $\mu$m.

Accordingly, in an image obtained by image capturing, ghost and flare occur within a range GF2 that is extremely close to the intense light, as illustrated in A of FIG. 9. However, as illustrated in B of FIG. 9, the ghost and flare caused by the totally reflected light components are not superimposed on a subject which is a face authentication target. Therefore, the accuracy of distance measurement is not degraded, and precise biometric authentication can be performed.

In addition, diffractive reflection light not having been totally reflected by the BPF 205 and having a reflection angle of less than 41° is also imaged at a point close to the entering point of the intense light (entering light Li), compared to the points where the light totally reflected by the BPF 205 are imaged. Therefore, such diffractive reflection light hardly affects the accuracy of distance measurement.

For example, when the pixel pitch d in the light reception section 202a = 3 $\mu$m, the wavelength $\lambda$ of infrared light = 940 nm, and the refractive index n of the adhesive resin 203 and the transparent member 204 = 1.51, the diffraction angle $\theta$ of the m-th order diffractive reflection light which is reflected by the light reception section 202a is expressed by the above Expression (2).

Therefore, in accordance with Expression (2), the diffraction angle $\theta$ of the first order diffractive reflection light is approximately 12.06°. In a case where the distance between the light reception section 202a and the BPF 205 is 100 $\mu$m, the distance, in the light reception section 202a, from the entering point of the entering light Li to the reentering point of the reentering light Ri1 is approximately 42 $\mu$m. That is, the first order diffractive reflection light is imaged at a point apart, by 14 pixels, from the position where the intense light has been imaged.

Further, in accordance with Expression (2), the diffraction angle $\theta$ of the second order diffractive reflection light (m = 2) is approximately 24.69°. In a case where the distance between the light reception section 202a and the BPF 205 is 100 $\mu$m, the distance, in the light reception section 202a, from the entering point of the entering light Li to the reentering point of the reentering light Ri2 is approximately 90 $\mu$m. That is, the second order diffractive reflection light is imaged at a point apart, by 30 pixels, from the position where the intense light has been imaged.

Likewise, in accordance with Expression (2), the diffraction angle $\theta$ of the third order diffractive reflection light (m = 3) is approximately 38.80°. In a case where the distance between the light reception section 202a and the BPF 205 is 100 $\mu$m, the distance, in the light reception section 202a, from the entering point of the entering light Li to the reentering point of the reentering light Ri3 is approximately 160 $\mu$m. That is, the third order diffractive reflection light is imaged at a point apart, by 54 pixels, from the position where the intense light has been imaged.

In such a manner, the points where the first to third order diffractive reflection lights are imaged are included within the distance of 80 pixels from the point where the intense light has been imaged.

In the past, the configuration in which an IR cut filter is provided to a transparent member formed integrally with an image sensor has been known, as disclosed in PTL 1. However, in a biometric authentication apparatus for performing biometric authentication involving distance measurement, providing a BPF that allows infrared light to pass therethrough to a transparent member formed integrally with an image sensor has not been considered.

In the distance measurement apparatus 1 according to the present embodiment, since the BPF 205 is formed on the transparent member 204 that is formed integrally with the image sensor 202, the distance between the light reception section 202a and the BPF 205 can be made sufficiently small. Accordingly, in an image obtained by image capturing by the biometric authentication apparatus, ghost and flare caused by reentering light components can be arranged so as not to be superimposed on a subject which is a face authentication target. That is, high-precise distance measurement can be conducted even in intense light such as sunlight. As a result, precise biometric authentication can be performed.

<4. Second Embodiment>

FIGS. 10 and 11 each depict an internal configuration example of the imaging camera 40 included in the distance measurement apparatus 1 according to the second embodiment of the present disclosure.

In addition to configurations similar to those in FIGS. 7 and 8, a cover glass 221 is provided between the solid state imaging device 200 and the camera lens OP in the example in FIGS. 10 and 11.

An antireflection layer 222 is formed on the lower surface (image sensor 202-side surface) of the cover glass 221. On the other hand, an adjustment film 223 is formed on the upper surface (camera lens OP-side surface) of the cover glass 221.

The BPF 205 is formed by vapor deposition on the surface of the transparent member 204, as previously explained. A bandpass filter formed by vapor deposition typically has such a transmission characteristic that a peak appears in a wavelength band apart from a stopband when a target wavelength that is intended to be transmitted through the filter is defined as a center wavelength $\lambda 0$, as illustrated in FIG. 12. In order to suppress such a peak, it is necessary to perform vapor deposition or the like in a tank filled with hydrogen. This incurs a great increase in cost.

To this end, the adjustment film 223 is formed so as to have a characteristic of prohibiting transmission of light of such a wavelength band.

FIG. 13 illustrates an example of the transmission characteristics of the BPF 205 and the adjustment film 223.

In FIG. 13, a transmission characteristic C205 of the BPF 205 is indicated by a solid line, and a transmission characteristic C223 of the adjustment film 223 is indicated by a dotted line.

In the transmission characteristic C205, a peak appears at 940 nm which is the wavelength of infrared light intended to be transmitted through the BPF, and further, another peak appears near a wavelength $\lambda 1$ which is apart from a stopband when 940 nm is set as the center wavelength. Consequently, not only infrared light but also light around the wavelength $\lambda 1$ is transmitted through the BPF 205.

On the other hand, in the transmission characteristic C223, light of a wavelength band including the wavelength $\lambda 1$ is prohibited from transmitting through the adjustment film 223 (is cut).

That is, a combination of the BPF 205 and the adjustment film 223 has a transmission characteristic Cmix indicated by a dot-dash line in FIG. 13. In the transmission characteristic Cmix, transmission of only the peak wavelength of infrared light is allowed, and the remaining wavelengths of infrared light including the wavelength $\lambda 1$ are cut.

Therefore, since the adjustment film 223 through which light of a wavelength band lower than a stopband of the BPF 205 and light of a wavelength band higher than the stopband of the BPF 205 are prohibited from transmitting is provided, any light other than infrared light can be inhibited from entering the image sensor 202. Accordingly, the accuracy of distance measurement is not degraded, and precise biometric authentication can be performed.

<5. Third Embodiment>

FIG. 14 depicts an internal configuration example of the imaging camera 40 included in the distance measurement apparatus 1 according to the third embodiment of the present disclosure.

In the configuration in FIG. 14, the BPF 205 is formed on the light reception section 202a (imaging surface)-side surface of the transparent member 204. In addition, the abovementioned adjustment film 223 is formed on the subject-side surface (camera lens OP-side surface) of the transparent member 204.

It is to be noted that, in the configuration in FIG. 14, the BPF 205 needs to be formed on the surface of the transparent member 204 before the transparent member 204 is bonded to the image sensor 202 with the transparent adhesive resin 203.

Since the BPF 205 is formed on the light reception section 202a-side surface of the transparent member 204 in such a manner, the distance between the light reception section 202a and the BPF 205 can be made extremely short. Accordingly, in an image obtained by image capturing by the biometric authentication apparatus, ghost and flare caused by reentering light components can be arranged so as not to be superimposed on a subject which is a face authentication target. That is, high-precise distance measurement can be conducted even in intense light such as sunlight. As a result, precise biometric authentication can be performed.

<6. Fourth Embodiment>

FIG. 15 depicts an internal configuration example of the imaging camera 40 included in the distance measurement apparatus 1 according to the fourth embodiment of the present disclosure.

In the configuration in FIG. 15, the transparent member 204 includes a cavity (void) 241 above the light reception section 202a of the image sensor 202. The BPF 205 is formed on the cavity 241-side surface (image sensor 202-side surface) of the transparent member 204. In addition, the abovementioned adjustment film 223 is formed on the subject-side surface (camera lens Op-side surface) of the transparent member 204.

Since, in the configuration in which the transparent member 204 includes the cavity 241 above the light reception section 202a, the BPF 205 is formed on the cavity 241-side surface of the transparent member 204 in such a manner, the distance between the light reception section 202a and the BPF 205 can be made sufficiently short. Accordingly, in an image obtained by image capturing by the biometric authentication apparatus, ghost and flare caused by reentering light components can be arranged so as not to be superimposed on a subject which is a face authentication target. That is, high-precise distance measurement can be conducted even in intense light such as sunlight. As a result, precise biometric authentication can be performed.

<7. Fifth Embodiment>

FIG. 16 depicts an internal configuration example of the imaging camera 40 included in the distance measurement apparatus 1 according to the fifth embodiment of the present disclosure.

Also in the configuration in FIG. 16, the transparent member 204 includes the cavity 241 above the light reception section 202a of the image sensor 202. The BPF 205 is formed on the subject-side surface (camera lens OP-side surface) of the transparent member 204. In addition, the abovementioned adjustment film 223 is formed on the cavity 241-side surface (image sensor 202-side surface) of the transparent member 204.

Since, in the configuration in which the transparent member 204 includes the cavity 241 above the light reception section 202a, the BPF 205 is formed on the subject-side surface of the transparent member 204 in such a manner, the distance between the light reception section 202a and the BPF 205 can be made sufficiently short. Accordingly, in an image obtained by image capturing by the biometric authentication apparatus, ghost and flare caused by reentering light components can be arranged so as not to be superimposed on a subject which is a face authentication target. That is, high-precise distance measurement can be conducted even in intense light such as sunlight. As a result, precise biometric authentication can be performed.

<8. Sixth Embodiment>

FIG. 17 depicts an internal configuration example of the imaging camera 40 included in the distance measurement apparatus 1 according to the sixth embodiment of the present disclosure.

The imaging camera 40 according to the present embodiment includes a solid state imaging device 300. The solid state imaging device 300 images incident infrared light having been reflected by a subject and having entered the solid state imaging device 300 through the camera lens OP.

The solid state imaging device 300 includes a substrate 301, an image sensor 302, and a wire 303.

The image sensor 302 includes a light reception section 302a forming an imaging surface in which pixels are arranged in a matrix form. In addition, respective bonding pads of the substrate 301 and the image sensor 302 are connected via the wire 303, so that the substrate 301 and the image sensor 302 are electrically connected.

A transparent member 305 that is formed of a glass substrate, for example, is bonded to the image sensor 302 with a transparent adhesive resin 304. Accordingly, the transparent member 305 is integrated with the image sensor 302.

An adjustment film 306 is formed on the image sensor 302-side surface of the transparent member 305. In addition, a BPF 307, which is a transmission film that allows at least a peak wavelength band (930 to 950 nm) of infrared light to transmit therethrough and that cuts the remaining wavelength bands of infrared light, is formed on the subject-side surface (camera lens OP-side surface) of the transparent member 305.

In the configuration in which the substrate 301 and the image sensor 302 are connected via the wire 303, the image sensor 302 and the transparent member 305 are integrally formed, and the BPF 307 is formed on the subject-side surface of the transparent member 305 in such a manner. Therefore, the distance between the light reception section 302a and the BPF 307 can be made sufficiently short. Accordingly, in an image obtained by image capturing by the biometric authentication apparatus, ghost and flare caused by reentering light components can be arranged so as not to be superimposed on a subject which is a face authentication target. That is, high-precise distance measurement can be conducted even in intense light such as sunlight. As a result, precise biometric authentication can be performed.

<9. Configuration Example of Electronic Apparatus>

The distance measurement apparatus 1 having been explained so far is applicable not only to a biometric authentication apparatus, but also to various types of electronic apparatuses including image capturing apparatuses such as digital still cameras, digital video cameras, monitoring cameras, and on-vehicle cameras, camera-equipped mobile phones having distance measuring functions, and any other apparatuses having distance measuring functions.

FIG. 18 is a block diagram depicting a configuration example of an electronic apparatus to which the technology according to the present disclosure is applied.

An electronic apparatus 500 depicted in FIG. 18 includes an optical system 501, a shutter device 502, a solid state imaging device 503, a control circuit 504, a signal processing circuit 505, a monitor 506, and a memory 507. The electronic apparatus 500 is capable of capturing still images and video images.

The optical system 501 includes one or more lenses. The optical system 501 guides subject light (entering light) to the solid state imaging device 503, and forms an image on a light reception section in the solid state imaging device 503.

The shutter device 502 is disposed between the optical system 501 and the solid state imaging device 503, and controls a time period for applying light to the solid state imaging device 503 and a time period for blocking the light, under the control of the control circuit 504.

The solid state imaging device 503 includes a package including the abovementioned image sensor. The solid state imaging device 503 accumulates signal charges during a fixed period of time according to light an image of which is formed on the light reception section via the optical system 501 and the shutter device 502. The signal charges accumulated in the solid state imaging device 503 are transferred according to a driving signal (timing signal) supplied from the control circuit 504.

By outputting a driving signal for controlling a transfer operation of the solid state imaging device 503 and a shutter operation of the shutter device 502, the control circuit 504 drives the solid state imaging device 503 and the shutter device 502.

The signal processing circuit 505 performs various signal processes on the signal charges outputted from the solid state imaging device 503. An image (image data) obtained as a result of the signal processes performed by the signal processing circuit 505 is supplied to the monitor 506 and is displayed thereon, or is supplied to the memory 507 and is saved (recorded) therein.

Also with the electronic apparatus 500 having the above configuration, high-precise distance measurement can be conducted even in intense light such as sunlight with the abovementioned solid state imaging device 200 or 300 applied to the optical system 501 and the solid state imaging device 503.

It is to be noted that the embodiments of the present disclosure are not limited to the abovementioned embodiments, and various changes can be made within the scope of the gist of the present disclosure.

In addition, the effects described herein are just examples, and effects to be provided by the present disclosure are not limited thereto. Any other effect may be provided.

Furthermore, the present disclosure can have the following configurations.

(1) A distance measurement apparatus including:

a light source that applies light to a subject;
an image sensor that captures an image of the subject;
a distance measurement section that calculates a distance to the subject on the basis of the image obtained by the image capturing; and
a transparent member that is formed, on the image sensor, so as to be integrated with the image sensor, in which
the transparent member includes a transmission film that allows a peak wavelength band of the light of the light source to transmit therethrough.

(2) The distance measurement apparatus according to (1), further including:

a diffractive optical element that generates diffraction light from the light of the light source, in which
the image sensor captures an image of the subject being irradiated with the diffraction light.

(3) The distance measurement apparatus according to (2), further including:
a correction lens that causes the light of the light source to perpendicularly enter the diffractive optical element.

(4) The distance measurement apparatus according to any one of (1) to (3), in which
the light source emits infrared light.

(5) The distance measurement apparatus according to any one of (1) to (4), in which

the transparent member is formed of a glass substrate that is bonded to the image sensor, and
the image sensor has a CSP (Chip Size Package) structure.

(6) The distance measurement apparatus according to (5), in which
the transmission film is formed on a subject-side surface of the transparent member.

(7) The distance measurement apparatus according to (5), in which
the transmission film is formed on an image sensor's imaging surface-side surface of the transparent member.

(8) The distance measurement apparatus according to (7), in which

the transparent member includes a cavity above the imaging surface of the image sensor, and
the transmission film is formed on a cavity-side surface of the transparent member.

(9) The distance measurement apparatus according to any one of (5) to (8), in which
a distance between the imaging surface of the image sensor and the transmission film is set to be at least less than 400 µm.

(10) The distance measurement apparatus according to (9), in which
the distance between the imaging surface of the image sensor and the transmission film is set to fall within a range of 50 to 300 µm.

(11) The distance measurement apparatus according to any one of (1) to (10), further including:
an adjustment film through which light of a wavelength band lower than a stopband of the transmission film and/or light of a wavelength higher than a stopband of the transmission film is prohibited from transmitting.

(12) A biometric authentication apparatus including:

a light source that applies light to a subject;
an image sensor that captures an image of the subject;
a distance measurement section that calculates a distance to the subject on the basis of the image obtained by the image capturing; and
a transparent member that is formed, on the image sensor, so as to be integrated with the image sensor, in which
the transparent member includes a transmission film that allows a peak wavelength of the light of the light source to transmit therethrough.

[Reference Signs List]

1: Distance measurement apparatus
10: Light source
20: Correction lens
30: Diffractive optical element
40: Imaging camera
200: Solid state imaging device
201: Substrate
202: Image sensor
202a: Light reception section
203: Adhesive resin
204: Transparent member
205: BPF
221: Cover glass
222: Antireflection layer
223: Adjustment film
241: Cavity
500: Electronic apparatus
503: Solid state imaging device

## Claims

1. A distance measurement apparatus comprising:

a light source that applies light to a subject;
an image sensor that captures an image of the subject;
a distance measurement section that calculates a distance to the subject on a basis of the image obtained by the image capturing; and
a transparent member that is formed, on the image sensor, so as to be integrated with the image sensor, wherein
the transparent member includes a transmission film that allows a peak wavelength band of the light of the light source to transmit therethrough.

2. The distance measurement apparatus according to claim 1, further comprising:

a diffractive optical element that generates diffraction light from the light of the light source, wherein
the image sensor captures an image of the subject being irradiated with the diffraction light.

3. The distance measurement apparatus according to claim 2, further comprising:
a correction lens that causes the light of the light source to perpendicularly enter the diffractive optical element.

4. The distance measurement apparatus according to claim 1, wherein
the light source emits infrared light.

5. The distance measurement apparatus according to claim 1, wherein

the transparent member is formed of a glass substrate that is bonded to the image sensor, and
the image sensor has a CSP (Chip Size Package) structure.

6. The distance measurement apparatus according to claim 5, wherein
the transmission film is formed on a subject-side surface of the transparent member.

7. The distance measurement apparatus according to claim 5, wherein
the transmission film is formed on an image sensor's imaging surface-side surface of the transparent member.

8. The distance measurement apparatus according to claim 7, wherein

the transparent member includes a cavity above the imaging surface of the image sensor, and
the transmission film is formed on a cavity-side surface of the transparent member.

9. The distance measurement apparatus according to claim 5, wherein
a distance between the imaging surface of the image sensor and the transmission film is set to be at least less than 400 $\mu$m.

10. The distance measurement apparatus according to claim 9, wherein
the distance between the imaging surface of the image sensor and the transmission film is set to fall within a range of 50 to 300 $\mu$m.

**11.** The distance measurement apparatus according to claim 1, further comprising:
an adjustment film through which light of a wavelength band lower than a stopband of the transmission film and/or light of a wavelength higher than a stopband of the transmission film is prohibited from transmitting.

**12.** A biometric authentication apparatus comprising:

a light source that applies light to a subject;
an image sensor that captures an image of the subject;
a distance measurement section that calculates a distance to the subject on a basis of the image obtained by the image capturing; and
a transparent member that is formed, on the image sensor, so as to be integrated with the image sensor, wherein
the transparent member includes a transmission film that allows a peak wavelength of the light of the light source to transmit therethrough.

F I G . 1

SB

30

20

10

40

50

DISTANCE MEASUREMENT SECTION

FIG. 2

FIG. 3

FIG.4

# FIG.5

GF1

A

B

EP 3 998 448 A1

EP 3 998 448 A1

FIG.6

F I G . 7

EP 3 998 448 A1

FIG.8

FIG.9

A

B

GF2

EP 3 998 448 A1

FIG.10

OP

Li

Lt

Lr

Ri

202a

223
221
222
205
204
203
202

201

200

# FIG.11

EP 3 998 448 A1

F I G . 1 2

FIG.13

EP 3 998 448 A1

EP 3 998 448 A1

# FIG.14

EP 3 998 448 A1

# FIG.15

EP 3 998 448 A1

FIG.16

FIG.17

OP

Li

Lt

Ri

Lr

302a

306
304

307
305

303
302

301

300

# FIG.18

500

501 502 503 505

| SOLID STATE IMAGING DEVICE | SIGNAL PROCESSING CIRCUIT |

MEMORY ~507

MONITOR ~506

CONTROL CIRCUIT ~504

## INTERNATIONAL SEARCH REPORT

International application No.

PCT/JP2020/024973

A.  CLASSIFICATION OF SUBJECT MATTER
G01B 11/00(2006.01)i; G01C 3/06(2006.01)i; G06T 1/00(2006.01)i
FI: G01C3/06 120S; G06T1/00 400H; G01B11/00 H

According to International Patent Classification (IPC) or to both national classification and IPC

B.  FIELDS SEARCHED

Minimum documentation searched (classification system followed by classification symbols)
G01B11/00; G01C3/06; G06T1/00

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | WO 2019/053998 A1 (SONY CORP.) 21.03.2019 (2019-03-21) paragraphs [0027]-[0046], fig. 1-4 | 1-12 |
| Y | WO 2016/098810 A1 (ASAHI GLASS CO., LTD.) 23.06.2016 (2016-06-23) paragraphs [0110]-[0136], fig. 13-19 | 1-12 |
| Y | JP 2012-169489 A (SONY CORP.) 06.09.2012 (2012-09-06) paragraphs [0081]-[0133], fig. 3, 10-13 | 5-10 |
| Y | JP 2018-200423 A (SONY SEMICONDUCTOR SOLUTIONS CORPORATION) 20.12.2018 (2018-12-20) paragraphs [0069]-[0074], [0081], [0103]-[0107], fig. 7, 12 | 5-10 |

☐  Further documents are listed in the continuation of Box C.    ☒  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 August 2020 (24.08.2020) | 08 September 2020 (08.09.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2020/024973

| Patent Documents referred in the Report | Publication Date | Patent Family | Publication Date |
|---|---|---|---|
| WO 2019/053998 A1 | 21 Mar. 2019 | (Family: none) | |
| WO 2016/098810 A1 | 23 Jun. 2016 | US 2017/0276846 A1 paragraphs [0215]-[0250], fig. 13-19 CN 107003453 A | |
| JP 2012-169489 A | 06 Sep. 2012 | US 2012/0205766 A1 paragraphs [0106]-[0165], fig. 3, 10-13 CN 102647564 A | |
| JP 2018-200423 A | 20 Dec. 2018 | WO 2018/221191 A1 paragraphs [0052]-[0057], [0064], [0086]-[0090], fig. 7, 12 TW 201902206 A CN 110431453 A KR 10-2020-0014291 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007073958 A